# EUROPEAN PATENT APPLICATION

(11) **EP 4 478 515 A1**
(43) Date of publication of application: **18.12.2024**
(21) Application number: 23753261.9
(22) Date of filing: 14.02.2023
(51) Int. Cl.: H01M 50/403, H01M 50/431, H01M 10/052, B01F 23/50

(54) **PREPARATION METHOD FOR SEPARATOR, SEPARATOR PREPARED THEREBY AND ELECTROCHEMICAL DEVICE COMPRISING SAME**

(30) Priority: 14.02.2022 KR 20220019173
(71) Applicant: LG Chem, Ltd., Yeongdeungpo-gu Seoul 07336 (KR)
(72) Inventor: LEE, Joo-Sung, Daejeon 34122 (KR); JIN, Sun-Mi, Daejeon 34122 (KR)
(74) Representative: Hoffmann Eitle
(86) International application number: PCT/KR2023/002164
(87) International publication number: WO 2023/153915

(57) **Abstract**

The present disclosure relates to a method for manufacturing a separator, a separator obtained by the method and an electrochemical device including the separator. The method for manufacturing a separator includes the steps of: (S1) preparing a slurry containing inorganic particles, a binder polymer and a solvent; (S2) carrying out dispersion of the inorganic particles in the slurry, wherein the dispersion is carried out by using two types of dispersion instruments of a contact type dispersion instrument and a non-contact type dispersion instrument, and the contact type dispersion instrument includes beads having an average particle diameter at least 200 times larger than the average particle diameter (D₅₀) of the inorganic particles; and (S3) applying the slurry to at least one surface of a polymer porous support, followed by drying. The present disclosure provides a method for manufacturing a separator which can disperse the inorganic particles homogeneously in the slurry. The separator obtained by the method causes low aggregation of the inorganic particles to show reduced defects of surface protrusions in its appearance and can provide excellent physical properties.

## Description

### TECHNICAL FIELD

The present disclosure relates to a separator which may be used for an electrochemical device, such as a lithium secondary battery, a method for manufacturing a separator and an electrochemical device including the separator.

The present application claims priority to Korean Patent Application No. 10-2022-0019173 filed on February 14, 2022 in the Republic of Korea, the disclosures of which are incorporated herein by reference.

### BACKGROUND ART

Recently, energy storage technology has been given an increasing attention. Efforts into research and development for electrochemical devices have been actualized more and more, as the application of energy storage technology has been extended to energy for cellular phones, camcorders and notebook PCs and even to energy for electric vehicles. In this context, electrochemical devices have been most spotlighted. Among such electrochemical devices, development of rechargeable lithium secondary batteries having high energy density have been focused. Recently, there has been great attention in ensuring safety, in developing such secondary batteries.

In a lithium secondary battery currently in production, a polymer porous support using a polyolefin-based polymer resin as a separator substrate has been used in order to prevent a short-circuit between a positive electrode and a negative electrode. However, the polymer porous support is problematic in that it is shrunk or molten at high temperature and shows low heat resistance. Therefore, when the battery is heated to high temperature due to an internal/external stimulation, it is highly likely that the positive electrode and the negative electrode are in contact with each other because of the shrinking or melting of the separator to cause a short-circuit. For this reason, electric energy is released rapidly, resulting in the explosion and ignition of the battery.

Therefore, there has been widely used a method for improving the heat resistance by forming an inorganic composite porous layer containing inorganic particles mixed with a binder polymer on at least one surface of the polymer porous support in order to solve the above-mentioned problem.

In such a separator, the inorganic particles and the binder particles are aggregated to generate composite particles, when preparing a slurry for forming an inorganic composite porous layer. In addition, the inorganic particles in the slurry are aggregated to cause some problems, including a decrease in air permeability and an increase in resistance value. To solve this, in a conventional process for manufacturing a separator, there has been carried out a milling step of crushing, mixing and dispersing the inorganic particles in the slurry for forming an inorganic composite porous layer. However, the conventional milling step has a difficulty in ensuring the dispersibility of the inorganic particles.

### DISCLOSURE

### Technical Problem

The present disclosure is designed to solve the problems of the related art, and therefore the present disclosure is directed to providing a method for manufacturing a separator which can disperse inorganic particles homogeneously in slurry capable of forming an inorganic composite porous layer.

The present disclosure is also directed to providing a separator having excellent physical properties and an electrochemical device including the separator.

It will be easily understood that these and other objects and advantages of the present disclosure may be realized by the means shown in the appended claims and combinations thereof.

### Technical Solution

The inventors of the present disclosure have found that the above-mentioned problems can be solved by the method for manufacturing a separator as described hereinafter, a separator obtained therefrom and an electrochemical device including the separator.

According to the first embodiment of the present disclosure, there is provided a method for manufacturing a separator, including the steps of:
(S1) preparing a slurry containing inorganic particles, a binder polymer and a solvent;
(S2) carrying out dispersion of the inorganic particles in the slurry, wherein the dispersion is carried out by using two types of dispersion instruments of a contact type dispersion instrument and a non-contact type dispersion instrument, and the contact type dispersion instrument includes beads having an average particle diameter at least 200 times larger than the average particle diameter (D₅₀) of the inorganic particles; and
(S3) applying the slurry to at least one surface of a polymer porous support, followed by drying.

According to the second embodiment of the present disclosure, there is provided the method for manufacturing a separator as defined in the first embodiment, wherein the contact type dispersion instrument includes beads having an average particle diameter 2000-4000 times larger than the average particle diameter (D₅₀) of the inorganic particles.

According to the third embodiment of the present disclosure, there is provided the method for manufacturing a separator as defined in the first or the second embodiment, wherein the dispersion is carried out in the contact type dispersion instrument first, and then is carried out in the non-contact type dispersion instrument.

According to the fourth embodiment of the present disclosure, there is provided the method for manufacturing a separator as defined in the third embodiment, wherein the inorganic particles in the slurry shows a particle size distribution (PSD) in which the ratio of the inorganic particles having a particle diameter at least 10 times larger than the average particle diameter (D₅₀) of the inorganic particles is 5% or less, after carrying out the dispersion in the contact type dispersion instrument.

According to the fifth embodiment of the present disclosure, there is provided the method for manufacturing a separator as defined in any one of the first to the fourth embodiments, wherein the contact type dispersion instrument uses a bead mill, a ball mill, a spike mill, a basket mill, an attrition mill, or a combined dispersion process of two or more of them.

According to the sixth embodiment of the present disclosure, there is provided the method for manufacturing a separator as defined in any one of the first to the fifth embodiments, wherein the non-contact type dispersion instrument is a high-pressure homogenizer.

According to the seventh embodiment of the present disclosure, there is provided the method for manufacturing a separator as defined in any one of the first to the sixth embodiments, wherein the dispersion using the non-contact type dispersion instrument is carried out under a pressure condition of 5-200 MPa.

According to the eighth embodiment of the present disclosure, there is provided the method for manufacturing a separator as defined in any one of the first to the seventh embodiments, wherein the beads have an average particle diameter (D₅₀) of 0.5 mm or more.

According to the ninth embodiment of the present disclosure, there is provided the method for manufacturing a separator as defined in any one of the first to the eighth embodiments, wherein the bead is a zirconia bead, an alumina bead, an yttria-stabilized zirconia (YSZ) bead, a titania bead, or two or more of them.

According to the tenth embodiment of the present disclosure, there is provided the method for manufacturing a separator as defined in any one of the first to the ninth embodiments, wherein the inorganic particles have an average particle diameter of 0.01-1.0 µm.

According to the eleventh embodiment of the present disclosure, there is provided a separator obtained by the method as defined in any one of the first to the tenth embodiments.

According to the twelfth embodiment of the present disclosure, there is provided an electrochemical device including a positive electrode, a negative electrode and the separator as defined in the eleventh embodiment, interposed between the positive electrode and the negative electrode.

According to the thirteenth embodiment of the present disclosure, there is provided the electrochemical device as defined in the twelfth embodiment, which is a lithium secondary battery.

### Advantageous Effects

According to the present disclosure, a contact type dispersion process and a non-contact type dispersion process are used as a method for dispersing inorganic particles in slurry. In this manner, it is possible to inhibit generation of secondary particles, to remove coarse inorganic particles and to disperse fine inorganic particles. Therefore, it is possible to provide a method for manufacturing a separator showing improved dispersibility of inorganic particles.

In addition, according to the present disclosure, it is possible to provide a separator showing reduced defects of surface protrusions in its appearance and having excellent physical properties, and an electrochemical device including the separator.

### DESCRIPTION OF DRAWINGS

The accompanying drawings illustrate a preferred embodiment of the present disclosure and together with the foregoing disclosure, serve to provide further understanding of the technical features of the present disclosure, and thus, the present disclosure is not construed as being limited to the drawing. Meanwhile, shapes, sizes, scales or proportions of some constitutional elements in the drawings may be exaggerated for the purpose of clearer description.
FIG. 1 illustrates the result of particle size distribution of slurry dispersed according to Example 1.
FIG. 2 illustrates the result of particle size distribution of slurry dispersed according to Comparative Example 1.

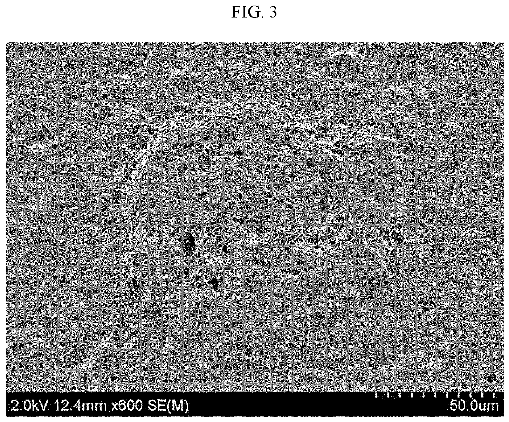

FIG. 3 illustrates the result of the protrusions of the separator obtained according to Comparative Example 1, as observed by scanning electron microscopy (SEM).

### BEST MODE

Hereinafter, preferred embodiments of the present disclosure will be described in detail with reference to the accompanying drawings. Prior to the description, it should be understood that the terms used in the specification and the appended claims should not be construed as limited to general and dictionary meanings, but interpreted based on the meanings and concepts corresponding to technical aspects of the present disclosure on the basis of the principle that the inventor is allowed to define terms appropriately for the best explanation.

Throughout the specification, the expression `a part includes an element' does not preclude the presence of any additional elements but means that the part may further include the other elements.

As used herein, the expression `A and/or B' means `A, B or both of them'.

A separator is obtained by applying a slurry for forming an inorganic composite porous layer to a polymer porous support and carrying out drying to form an inorganic composite porous layer. If the slurry particles are not dispersed homogeneously in the slurry for forming an inorganic composite porous layer, the inorganic particles are aggregated among themselves in the inorganic composite porous layer to cause the problems of an increase in the resistance of the separator or a decrease in the air permeability thereof. According to the related art, a milling step was carried out as a contact type dispersion process in preparing a slurry for forming an inorganic composite porous layer in order to solve the above-mentioned problems. However, even when carrying out such a milling step, there was still a problem of degradation of the dispersibility of the inorganic particles in the slurry for forming an inorganic composite porous layer. Particularly, when carrying out such a milling step, it was required to control the average particle diameter of beads considering the particle diameter of fine inorganic particles in order to realize a desired particle distribution and for the convenience of processing management.

Meanwhile, a non-contact type dispersion process has not been used in the field of manufacturing separators. However, the inventors of the present disclosure have found that use of a non-contact type dispersion process for manufacturing a separator can apply strong shear force to a fluidized phase, thereby allowing the inorganic particles to be dispersed homogeneously in the slurry.

Particularly, according to the present disclosure, there is provided a method for manufacturing a separator which uses a contact type dispersion process and a non-contact type dispersion process suitably to inhibit generation of secondary particles, to remove coarse inorganic particles and to disperse fine inorganic particles and thus can disperse the inorganic particles homogeneously in manufacturing a separator.

In one aspect of the present disclosure, there is provided a method for manufacturing a separator, including the steps of:
(S1) preparing a slurry containing inorganic particles, a binder polymer and a solvent;
(S2) carrying out dispersion of the inorganic particles in the slurry, wherein the dispersion is carried out by using two types of dispersion instruments of a contact type dispersion instrument and a non-contact type dispersion instrument, and the contact type dispersion instrument includes beads having an average particle diameter at least 200 times larger than the average particle diameter (D₅₀) of the inorganic particles; and
(S3) applying the slurry to at least one surface of a polymer porous support, followed by drying.

In step (S1), prepared is a slurry containing inorganic particles, a binder polymer and a solvent.

According to an embodiment of the present disclosure, the slurry includes the inorganic particles dispersed in the solvent and the binder polymer dissolved in the solvent.

According to an embodiment of the present disclosure, the inorganic particles are not particularly limited, as long as they are electrochemically stable. In other words, the inorganic particles are not particularly limited, as long as they cause no oxidation and/or reduction in the operating voltage range (e.g. 0-5 V based on Li/Li⁺) of an applicable electrochemical device. Particularly, when using inorganic particles having a high dielectric constant, they contribute to an increase in dissociation degree of the electrolyte salt, particularly lithium salt, in a liquid electrolyte, and thus can improve ion conductivity of the electrolyte.

For these reasons, the inorganic particles may include inorganic particles having a dielectric constant of 5 or more, inorganic particles capable of transporting lithium ions and a mixture thereof.

The inorganic particles having a dielectric constant of 5 or more may be at least one selected from the group consisting of Al₂O₃, SiO₂, ZrO₂, AlO(OH), TiO₂, BaTiO₃, Pb(ZrₓTi₁₋ₓ)O₃ (PZT, wherein 0 < x < 1), Pb₁₋ₓLaₓZr_{1-y}Ti_{y}O₃ (PLZT, wherein 0 < x < 1, 0 < y < 1), (1-x)Pb(Mg_{1/3}Nb_{2/3})O₃-xPbTiO₃ (PMN-PT, wherein 0 < x < 1), hafnia (HfO₂), SrTiO₃, SnO₂, CeO₂, MgO, NiO, CaO, ZnO, ZO₃ and SiC, or a mixture of two or more of them.

The inorganic particles capable of transporting lithium ions may be at least one selected from the group consisting of lithium phosphate (Li₃PO₄), lithium titanium phosphate (LiₓTi_{y}(PO₄)₃, 0 < x < 2, 0 < y < 3), lithium aluminum titanium phosphate (LiₓAl_{y}Ti_{z}(PO₄)₃, 0 < x < 2, 0 < y < 1, 0 < z < 3), (LiAlTiP)ₓO_{y}-based glass (0< x < 4, 0 < y < 13), lithium lanthanum titanate (LiₓLa_{y}TiO₃, 0 < x < 2, 0 < y < 3), lithium germanium thiophosphate (LiₓGe_{y}P_{z}S_{w}, 0 < x < 4, 0 < y < 1, 0 < z < 1, 0 < w < 5), lithium nitride (LiₓN_{y}, 0 < x < 4, 0 < y < 2), SiS₂-based glass (LiₓSi_{y}S_{z}, 0 < x < 3, 0 < y < 2, 0 < z < 4) and P₂S₅-based glass (LiₓP_{y}S_{z}, 0 < x < 3, 0 < y < 3, 0 < z < 7), or a mixture of two or more of them.

Although the average particle diameter (D₅₀) of the inorganic particles is not particularly limited, the inorganic particles may preferably have an average particle diameter of 0.01 µm or more, or 0.5 µm or more, and 10 µm or less, 5 µm or less, or 1 µm or less, in order to form a coating layer having a uniform thickness and to provide suitable porosity. The numeral range of average particle diameter may be a combination of each upper limit with each lower limit. As used herein, `average particle diameter (D₅₀)' refers to a particle diameter at the point of 50% in the particle number accumulated distribution as a function of particle diameter.

According to an embodiment of the present disclosure, the binder polymer may be one used conventionally for forming an inorganic composite porous layer when manufacturing a separator in the art. Particularly, a polymer having a glass transition temperature (T_{g}) of -200 to 200°C may be used. This is because such a polymer can improve the mechanical properties, such as flexibility and elasticity, of the finally formed inorganic composite porous layer. Such a binder polymer functions as a binder which interconnects the inorganic particles with one another and stably fixes them, and thus contributes to prevention of degradation of mechanical properties of a separator having an inorganic composite porous layer introduced thereto.

In addition, it is not essentially required for the binder polymer to have ion conductivity. However, when using a polymer having ion conductivity, it is possible to further improve the performance of an electrochemical device. Therefore, a binder polymer having a dielectric constant as high as possible may be used. In fact, since the dissociation degree of a salt in an electrolyte depends on the dielectric constant of the solvent for the electrolyte, a binder polymer having a higher dielectric constant can improve the salt dissociation degree in an electrolyte. The binder polymer may have a dielectric constant ranging from 1.0 to 100 (measured at a frequency of 1 kHz), particularly 10 or more.

In addition to the above-mentioned function, the binder polymer may be characterized in that it is gelled upon the wetting with a liquid electrolyte and thus shows a high degree of swelling. Thus, the binder polymer has a solubility parameter (i.e., Hildebrand solubility parameter) of 15-45 MPa^{1/2} or 15-25 MPa^{1/2} and 30-45 MPa^{1/2}. Therefore, hydrophilic polymers having many polar groups may be used more frequently as compared to hydrophobic polymers, such as polyolefins. When the solubility parameter is less than 15 MPa^{1/2} and more than 45 MPa^{1/2}, it is difficult for the binder polymer to be swelled with a conventional liquid electrolyte for a battery.

Non-limiting examples of the binder polymer may include polyvinylidene fluoride, polyvinylidene fluoride-co-hexafluoropropylene, polyvinylidene fluoride-co-trichloroethylene, polymethyl methacrylate, polyethylhexyl acrylate, polybutyl acrylate, polyacrylonitrile, polyvinyl pyrrolidone, polyvinyl acetate, polyethylene-co-vinyl acetate, polyethylene oxide, polyarylate, cellulose acetate, cellulose acetate butyrate, cellulose acetate propionate, cyanoethylpullulan, cyanoethylpolyvinylalchol, cyanoethyl cellulose, cyanoethyl sucrose, pullulan and carboxymethyl cellulose.

The weight ratio of the inorganic particles to the binder polymer may be 50:50-99: 1, particularly 70:30-95:5. When the weight ratio of the inorganic particles to the binder polymer satisfies the above-defined range, it is possible to prevent the problem of a decrease in pore size and porosity of the resultant inorganic composite porous layer, caused by an increase in content of the binder polymer. It is also possible to solve the problem of degradation of peeling resistance of the resultant inorganic composite porous layer, caused by a decrease in content of the binder polymer.

The method for manufacturing a separator according to an embodiment of the present disclosure may further include other additives, such as a dispersing agent, as an ingredient of the inorganic composite porous layer, besides the inorganic particles and the binder polymer.

According to an embodiment of the present disclosure, the solvent is not particularly limited, as long as it is a liquid capable of dissolving the binder polymer and is used conventionally in the art.

Non-limiting examples of the solvent may include acetone, tetrahydrofuran, methylene chloride, chloroform, trimethyl phosphate, triethyl phosphate, methyl ethyl ketone (MEK), toluene, hexane, cyclohexane, dimethyl formamide (DMF), dimethyl acetamide (DMAc), N-methyl-2-pyrrolidone (NMP), or a mixture of two or more of them, and preferably, acetone. In addition, non-limiting examples of the solvent may include an aqueous solvent, such as water, methanol, ethanol, ethylene glycol, diethylene glycol, glycerol, or a mixture of two or more of them.

Next, in step (S2), both of two types of dispersion instruments, i.e. a contact type dispersion instrument and a non-contact type dispersion instrument are used in order to disperse the inorganic particles in the slurry. According to the present disclosure, a contact type dispersion instrument and a non-contact type dispersion instrument are used suitably, thereby allowing the inorganic particles to be dispersed homogeneously in the slurry.

According to an embodiment of the present disclosure, dispersion is carried out in the contact type dispersion instrument first, and then in the non-contact type homogenizer in order to disperse the inorganic particles in the slurry. After coarse inorganic particles are removed in the contact type dispersion instrument, sufficient shear force may be applied to the non-contact type homogenizer, and thus there is an advantage in that fine inorganic particles may be dispersed with ease.

When the particle size distribution (PSD) is observed after carrying out dispersion in the contact type dispersion instrument, the ratio of inorganic particles having a particle diameter at least 10 times larger than the average particle diameter (D₅₀) of the inorganic particles may be 5% or less, as determined from the distribution of average particle size.

The contact type dispersion instrument generally refers to systems which can pulverize and disperse inorganic particles by the physical impact between beads and the inorganic particles inside of an instrument including the beads and a slurry containing the inorganic particles. For example, the contact type dispersion instrument may use a bead mill, a ball mill, a spike mill, a basket mill, an attrition mill, or a combined dispersion process of two or more of them.

For example, the contact type dispersion instrument may be a bead mill dispersion instrument using a bead mill dispersion process. The bead mill dispersion instrument may generally refer to systems which can pulverize and disperse inorganic particles by using a bead mill process. There is no particular limitation in the type of the bead mill dispersion instrument, as long as it is one used conventionally in the art.

Meanwhile, according to the present disclosure, the contact type dispersion instrument includes beads having an average particle diameter at least 200 times larger than the average particle diameter (D₅₀) of the inorganic particles. Particularly, the beads may have an average particle diameter 200-4000 times, or 2000-4000 times larger than the average particle diameter of the inorganic particles. The beads may have an average particle diameter at least 200 times larger than the average particle diameter of the inorganic particles, while the average particle diameter of the beads may be 0.5 mm or more, particularly 0.5-1.5 mm. When the bead mill dispersion instrument includes beads satisfying the above-defined predetermined average particle diameter range, it is possible to realize a desired particle size distribution and to inhibit generation of secondary particles by applying sufficient impact force to the inorganic particles. In addition, there is an advantage in that the dispersed inorganic particles are separated easily from the beads. Particularly, when using beads having an average particle diameter smaller than the above-defined range, the beads are difficult to manage in the process, and the quality of the separator may be problematic due to the generation of secondary particles which are not pulverized due to insufficient impact force.

Although there is no particular limitation in the type of the beads, preferred are beads capable of improving the dispersibility of the inorganic particles through the collision with the inorganic particles in the slurry. For example, the bead may be a zirconia bead, an alumina bead, an yttria-stabilized zirconia (YSZ) bead, a titania bead, or two or more of them.

According to the present disclosure, the non-contact type dispersion instrument may be a high-pressure homogenizer.

The high-pressure homogenizer may generally refer to systems which applies high pressure to a fine flow path to apply strong shear force to a material passing through the flow path so that the material may be homogenized. When the slurry is homogenized by such a high-pressure homogenizer, it is possible to disperse the inorganic particles homogeneously in the slurry. In addition, there is an advantage as compared to a contact type dispersion process using beads in that such a high-pressure homogenizer can disperse fine particles which have a difficulty in applying physical impact due to the size of beads used in the conventional contact type dispersion instrument.

The dispersion using such a high-pressure homogenizer may be carried out by applying a high pressure of 5 MPa or higher, or a high pressure of 5-200 MPa, preferably 10-50 MPa, to a fluid. When carrying out the dispersion under the above-defined condition, there is an advantage in that it is possible to ensure the durability of the instrument, while imparting sufficient dispersing force by which secondary particles can be dispersed.

Then, in step (S3), the slurry is applied to at least one surface of a polymer porous support, followed by drying.

Although there is no particular limitation in the process for coating the composition for forming an inorganic composite porous layer onto the porous polymer substrate, it is preferred to use a slot coating or dip coating process. A slot coating process includes coating a composition supplied through a slot die onto the whole surface of a substrate and is capable of controlling the thickness of a coating layer depending on the flux supplied from a metering pump. In addition, a dip coating process includes dipping a substrate into a tank containing a composition to carry out coating and is capable of controlling the thickness of a coating layer depending on the concentration of the composition and the rate of removing the substrate from the tank. Further, in order to control the coating thickness more precisely, it is possible to carry out post-metering through a Mayer bar or the like, after dipping.

Then, the porous polymer substrate coated with the composition for forming an inorganic composite porous layer may be dried in a dryer, such as an oven, to form an inorganic composite porous layer on at least one surface of the porous polymer substrate.

In the inorganic composite porous layer, the inorganic particles are bound to one another by the binder polymer, while they are packed and are in contact with each other, thereby forming interstitial volumes among the inorganic particles, and the interstitial volumes among the inorganic particles become vacant spaces to form pores.

In other words, the binder polymer attaches the inorganic particles to one another so that they may retain their binding states. For example, the binder polymer connects the inorganic particles with one another and fixes them. In addition, the pores of the inorganic composite porous layer are those formed by the interstitial volumes among the inorganic particles which become vacant spaces. The spaces may be defined by the inorganic particles facing each other substantially in a closely packed or densely packed structure of the inorganic particles.

In the electrode assembly according to the present disclosure, the porous polymer substrate may be a porous polymer film substrate or a porous polymer nonwoven web substrate.

The porous polymer film substrate may be a porous polymer film including polyolefin, such as polyethylene or polypropylene. Such a polyolefin porous polymer film substrate realizes a shut-down function at a temperature of 80-130°C.

Herein, the polyolefin porous polymer film may be formed of polymers including polyolefin polymers, such as polyethylene, including high-density polyethylene, linear low-density polyethylene, low-density polyethylene or ultrahigh-molecular weight polyethylene, polypropylene, polybutylene, or polypentene, alone or in combination of two or more of them.

In addition, the porous polymer film substrate may be obtained by molding various polymers, such as polyesters, other than polyolefins, into a film shape. Further, the porous polymer film may have a stacked structure of two or more film layers, wherein each film layer may be formed of polymers including the above-mentioned polymers, such as polyolefins or polyesters, alone or in combination of two or more of them.

In addition, the porous polymer film substrate and the porous nonwoven web substrate may be formed of polyethylene terephthalate, polybutylene terephthalate, polyester, polyacetal, polyamide, polycarbonate, polyimide, polyetherether ketone, polyether sulfone, polyphenylene oxide, polyphenylene sulfide, or polyethylene naphthalene, alone or in combination, besides the above-mentioned polyolefins.

There is no particular limitation in the thickness of the polymer porous support, the polymer porous support has a thickness of 1-100 µm, particularly 5-50 µm. Also, although the size and porosity of the pores present in the polymer porous support are not particularly limited, it is preferred that the pore size and porosity may be 0.01-50 µm and 10-95%, respectively.

In still another aspect of the present disclosure, there is provided a separator obtained by the above-described method. The separator obtained by the above-described method causes no aggregation of the inorganic particles in the inorganic composite porous layer, and thus shows a uniform distribution of pores formed by the interstitial volumes among the inorganic particles to realize low resistance and can prevent an internal short-circuit caused by non-dispersed coarse particles.

In yet another aspect of the present disclosure, there is provided an electrochemical device including a positive electrode, a negative electrode and a separator interposed between the positive electrode and the negative electrode, wherein the separator is obtained by the above-described method.

The electrochemical device includes any device which carries out electrochemical reaction, and particular examples thereof include all types of primary batteries, secondary batteries, fuel cells, solar cells or capacitors, such as super capacitor devices. Particularly, among the secondary batteries, lithium secondary batteries, including lithium metal secondary batteries, lithium-ion secondary batteries, lithium polymer secondary batteries or lithium-ion polymer secondary batteries, are preferred.

The two electrodes, positive electrode and negative electrode, used in combination with the separator according to the present disclosure are not particularly limited, and may be obtained by allowing electrode active materials to be bound to an electrode current collector through a method generally known in the art. Among the electrode active materials, non-limiting examples of a positive electrode active material include conventional positive electrode active materials that may be used for the positive electrodes for conventional electrochemical devices. Particularly, lithium manganese oxides, lithium cobalt oxides, lithium nickel oxides, lithium iron oxides or lithium composite oxides containing a combination thereof are used preferably. Non-limiting examples of a negative electrode active material include conventional negative electrode active materials that may be used for the negative electrodes for conventional electrochemical devices. Particularly, lithium-intercalating materials, such as lithium metal or lithium alloys, carbon, petroleum coke, activated carbon, graphite or other carbonaceous materials, are used preferably. Non-limiting examples of a positive electrode current collector include foil made of aluminum, nickel or a combination thereof. Non-limiting examples of a negative electrode current collector include foil made of copper, gold, nickel, nickel alloys or a combination thereof.

The electrolyte that may be used in the electrochemical device according to the present disclosure is a salt having a structure of A⁺B⁻, wherein A⁺ includes an alkali metal cation such as Li⁺, Na⁺, K⁺ or a combination thereof, and B⁻ includes an anion such as PF₆⁻, BF₄⁻, Cl⁻, Br⁻, I⁻, ClO₄⁻, AsF₆⁻, CH₃CO₂⁻, CF₃SO₃⁻, N(CF₃SO₂)₂⁻, C(CF₂SO₂)₃⁻ or a combination thereof, the salt being dissolved or dissociated in an organic solvent including propylene carbonate (PC), ethylene carbonate (EC), diethyl carbonate (DEC), dimethyl carbonate (DMC), dipropyl carbonate (DPC), dimethyl sulfoxide, acetonitrile, dimethoxyethane, diethoxyethane, tetrahydrofuran, N-methyl-2-pyrrolidone (NMP), ethyl methyl carbonate (EMC), gamma-butyrolactone (γ-butyrolactone) or a combination thereof. However, the present disclosure is not limited thereto.

Injection of the electrolyte may be carried out in an adequate step during the process for manufacturing a battery depending on the manufacturing process of a final product and properties required for a final product. In other words, injection of the electrolyte may be carried out before the assemblage of a battery or in the final step of the assemblage of a battery.

### MODE FOR DISCLOSURE

Examples will be described more fully hereinafter so that the present disclosure can be understood with ease. The following examples may, however, be embodied in many different forms and should not be construed as limited to the exemplary embodiments set forth therein. Rather, these exemplary embodiments are provided so that the present disclosure will be thorough and complete, and will fully convey the scope of the present disclosure to those skilled in the art.

### Examples

The separator according to each of Examples and Comparative Examples was obtained as follows.

### Example 1

1) First, at room temperature, Al₂O₃ inorganic particles (DAEHAN Ceramics, ALK-N1, average particle diameter 280 nm), polyvinylidene fluoride (PVDF) binder polymer and cyanoethylpullulan were introduced to acetone and agitated therein to prepare a slurry. The slurry had a ratio of the inorganic particles : PVDF : cyanoethylpullulan : acetone of 23 : 6 : 1 : 70 on the weight basis.
2) The slurry was introduced to a bead mill dispersion instrument. In the bead mill dispersion instrument, zirconia beads having an average particle diameter of 0.6 mm were used to carry out dispersion at a temperature of 50°C for 3 hours.
   After carrying out dispersion in the bead mill dispersion instrument, dispersion was further carried out by using a high-pressure homogenizer under a pressure condition of 20 MPa.
3) The slurry subjected to dispersion in the above-described manner was applied to one surface of a polyethylene porous film, SW811G (Senior, thickness 11 µm, porosity 48%), followed by drying, to obtain a separator.

### Example 2

A separator was obtained in the same manner as Example 1, except that zirconia beads having an average particle diameter of 1.0 mm were used in the bead mill dispersion instrument.

### Comparative Example 1

A separator was obtained in the same manner as Example 1, except that zirconia beads having an average particle diameter of 0.8 mm were used in the bead mill dispersion instrument and the high-pressure homogenizer was not used.

### Comparative Example 2

A separator was obtained in the same manner as Example 1, except that zirconia beads having an average particle diameter of 0.1 mm were used in the bead mill dispersion instrument.

### Comparative Example 3

A separator was obtained in the same manner as Example 1, except that the high-pressure homogenizer was used alone. In this case, the flow path of the high-pressure homogenizer was blocked due to the inorganic particles non-dispersed during the manufacturing process, and thus continuous production cannot be accomplished.

### Test Results

**[Table 1]**

| | Ex. 1 | Ex. 2 | Comp. Ex. 1 | Comp. Ex. 2 |
|---|---|---|---|---|
| Average particle diameter of inorganic particles (D₅₀, nm) | 280 | 280 | 280 | 280 |
| Slurry particle size (D₅₀, nm) | 357 | 359 | 362 | 442 |
| Slurry particle size (D₉₀, nm) | 1410 | 1420 | 1430 | 1410 |
| Ratio (%) of particles larger than particle diameter reference | 3.0 | 4.1 | 9.1 | 6.5 |
| Appearance (surface protrusions) | OK | OK | NG | NG |

### (1) Slurry Particle Size and Ratio (%) of Particles Larger Than Particle Diameter Reference

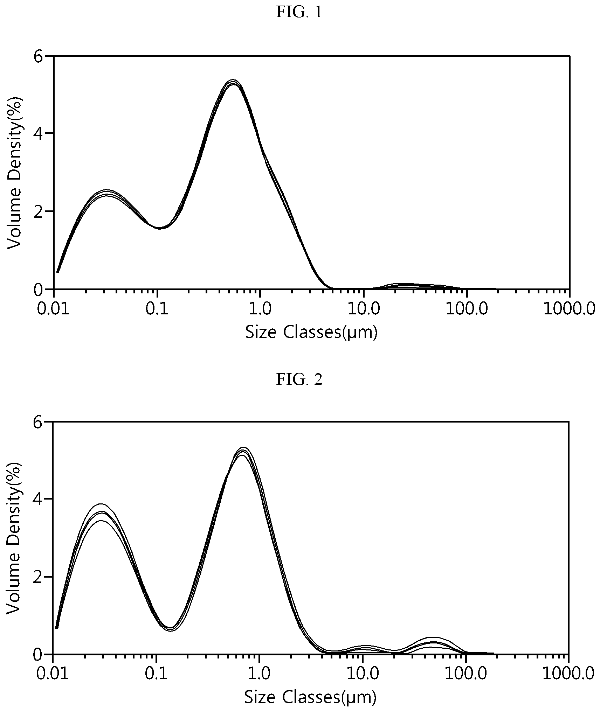

- The particle size distribution of the slurry after dispersion was determined to calculate D₅₀ and D₉₀ in the particle size distribution graph as a function of volume. FIG. 1 and FIG. 2 illustrate the particle size distribution graph of slurry dispersed according to Example 1 and that of slurry dispersed according to Comparative Example 1, respectively.

D₅₀ refers to the particle diameter corresponding to a volume of 50% from the largest particle diameter based on the total volume of the graph, and D₉₀ refers to the particle diameter corresponding to a volume of 90% from the largest particle diameter based on the total volume of the graph. In other words, D₅₀ and D₉₀ represent the particle size corresponding to a position of 5/10 and 9/10, when the graph is divided into 10 equal parts based on the particle diameter accumulated distributed plot.
- The ratio of particles larger than the particle diameter reference in Table 1 refers to the ratio of inorganic particles having a particle diameter at least 10 times larger than the average particle diameter (D₅₀) of the inorganic particles, as determined from the particle size distribution (PSD) of the inorganic particles in the slurry.

### (2) Method for Evaluating Appearance (Surface Protrusions)

Each separator was sampled with a size of 1 m X 1 m. Then, whether protrusions exist or not in the corresponding area was observed by the naked eyes. In this manner, each separator was qualified.

(Judgement criteria: OK- no protrusion, NG- protrusions are observed by the naked eyes)

## Claims

1. A method for manufacturing a separator, comprising the steps of:
(S1) preparing a slurry containing inorganic particles, a binder polymer and a solvent;
(S2) carrying out dispersion of the inorganic particles in the slurry, wherein the dispersion is carried out by using two types of dispersion instruments of a contact type dispersion instrument and a non-contact type dispersion instrument, and the contact type dispersion instrument includes beads having an average particle diameter at least 200 times larger than the average particle diameter (D₅₀) of the inorganic particles; and
(S3) applying the slurry to at least one surface of a polymer porous support, followed by drying.

2. The method for manufacturing a separator according to claim 1, wherein the contact type dispersion instrument comprises beads having an average particle diameter 2000-4000 times larger than the average particle diameter (D₅₀) of the inorganic particles.

3. The method for manufacturing a separator according to claim 1, wherein the dispersion is carried out in the contact type dispersion instrument first, and then is carried out in the non-contact type dispersion instrument.

4. The method for manufacturing a separator according to claim 3, wherein the inorganic particles in the slurry shows a particle size distribution (PSD) in which the ratio of the inorganic particles having a particle diameter at least 10 times larger than the average particle diameter (D₅₀) of the inorganic particles is 5% or less, after carrying out the dispersion in the contact type dispersion instrument.

5. The method for manufacturing a separator according to claim 1, wherein the contact type dispersion instrument uses a bead mill, a ball mill, a spike mill, a basket mill, an attrition mill, or a combined dispersion process of two or more of them.

6. The method for manufacturing a separator according to claim 1, wherein the non-contact type dispersion instrument is a high-pressure homogenizer.

7. The method for manufacturing a separator according to claim 1, wherein the dispersion using the non-contact type dispersion instrument is carried out under a pressure condition of 5-200 MPa.

8. The method for manufacturing a separator according to claim 1, wherein the beads have an average particle diameter (D₅₀) of 0.5 mm or more.

9. The method for manufacturing a separator according to claim 1, wherein the bead is a zirconia bead, an alumina bead, an yttria-stabilized zirconia (YSZ) bead, a titania bead, or two or more of them.

10. The method for manufacturing a separator according to claim 1, wherein the inorganic particles have an average particle diameter of 0.01-1.0 µm.

11. A separator obtained by the method as defined in any one of claims 1 to 10.

12. An electrochemical device comprising a positive electrode, a negative electrode and the separator as defined in claim 11, interposed between the positive electrode and the negative electrode.

13. The electrochemical device according to claim 12, which is a lithium secondary battery.
